(19) **Europäisches Patentamt**
**European Patent Office**
**Office européen des brevets**

(11) **EP 1 803 831 B1**

(12) **EUROPEAN PATENT SPECIFICATION**

(45) Date of publication and mention of the grant of the patent:
**25.12.2013 Bulletin 2013/52**

(51) Int Cl.:
*C22C 38/04* (2006.01)    *C22C 38/02* (2006.01)
*C22C 38/42* (2006.01)    *C22C 38/50* (2006.01)
*C22C 38/60* (2006.01)    *C22C 38/00* (2006.01)
*C23C 8/32* (2006.01)    *F16C 3/08* (2006.01)

(21) Application number: **06010693.7**

(22) Date of filing: **23.05.2006**

(54) **Nitrocarburized microalloyed steel member**

Nitrocarburiertes mikrolegiertes Stahlteil

Pièce en acier microalliée nitrocarburisée

(84) Designated Contracting States:
**DE FR GB**

(30) Priority: **28.12.2005 JP 2005379203**
**17.05.2006 JP 2006138299**

(43) Date of publication of application:
**04.07.2007 Bulletin 2007/27**

(73) Proprietors:
• **HONDA MOTOR CO., LTD.**
**Tokyo 107-8556 (JP)**
• **Daido Steel Co.,Ltd.**
**Nagoya**
**Aichi 461-8581 (JP)**

(72) Inventors:
• **Asai, Tetsuya**
**Wako-shi**
**Saitama, 351-0193 (JP)**
• **Takitani, Yoshihiro**
**Wako-shi**
**Saitama, 351-0193 (JP)**
• **Amano, Masaki**
**Wako-shi**
**Saitama, 351-0193 (JP)**

• **Hobo, Makoto**
**Daido Steel Co., Ltd.**
**Minami-ku**
**Nagoya-shi**
**Aichi, 457-8545 (JP)**
• **Kimura, Kazuyoshi**
**Daido Steel Co., Ltd.**
**Minami-ku**
**Nagoya-shi**
**Aichi, 457-8545 (JP)**
• **Takada, Katsunori**
**Daido Steel Co., Ltd.**
**Minami-ku**
**Nagoya-shi**
**Aichi, 457-8545 (JP)**

(74) Representative: **Dey, Michael et al**
**Weickmann & Weickmann**
**Patentanwälte**
**Richard-Strauss-Strasse 80**
**81679 München (DE)**

(56) References cited:
**EP-A1- 1 262 573      EP-A1- 1 548 141**
**JP-A- 9 195 000      JP-A- 10 219 393**
**JP-A- 11 029 838      JP-A- 2000 063 935**
**JP-A- 2004 292 915      US-A- 6 083 455**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background of the Invention

1. Field of the Invention

The present invention relates to a microalloyed steel member having a nitrocarburized layer formed on a surface.

2. Description of the Related Art

Patent Literature 1: Japanese Patent Application Laid-Open No. 10 -030632
Patent Literature 2: Japanese Patent Application Laid-Open No. 06-128690
Patent Literature 3: Japanese Patent Application Laid-Open No. 05-279795
Patent Literature 4: Japanese Patent Application Laid-Open No. 05-279794
Patent Literature 5: Japanese Patent Application Laid-Open No. 09-324258
Patent Literature 6: Japanese Patent Application Laid-Open No. 2002-226939
Patent Literature 7: Japanese Patent Application  Laid-Open No. 2005-264270
Patent Literature 8: EP1548141 A1

An automobile crankshaft is used in an environment in which a high torsional load and a high bending load repeatedly act on the crankshaft. The crankshaft is, therefore, required to be excellent in static strength and fatigue strength. On the other hand, since the crankshaft is a member quite large in size and complicated in shape, it is normally and basically manufactured using a microalloyed steel that is not quenched and tempered after being hot-forged. In this case, to secure strength, it is necessary to finally perform a hardening treatment on a surface of the steel. The Patent Literatures 1 to 4 disclose methods using a nitrocarburizing treatment as the surface hardening treatment. The nitrocarburizing treatment is a treatment in which a workpiece is treated in, for example, an ammonia gas atmosphere at a temperature equal to or lower than the A1 transformation point or generally at a temperature of about 570 degrees Centigrade, part of carbon as well as nitrogen is introduced into the steel, nitrides or carbides are produced, and a surface layer of the steel is thereby hardened. Such a nitrocarburizing treatment is suited for, for example, mass-production of crankshafts that are large-sized engine parts of an automobile since the treatment hardly generates strains in the workpiece differently from a carburizing and quenching method, and does not require a long time differently from a nitriding method.

Meanwhile, for the crankshaft manufactured using the nitrocarburizing treatment, it is essential to perform a straightening treatment thereon after the nitrocarburizing treatment so as to straighten a bend generated during forging or nitrocarburizing. Conventionally, with a view of ensuring an excellent straightenability, a normalizing treatment for size regulation for grains of the steel structures and elimination of strains is executed after the hot forging. However, the number of steps increases by as much as the added normalizing treatment, resulting in cost increase. Patent Literatures 5 to 7, therefore, disclose microalloyed steels each of which can ensure high straightenability even if this normalizing treatment is omitted. Patent Literature 8 discloses a mechanical component such as a crankshaft composed of a steel which is surface-hardened by nitriding.

Each of the conventional microalloyed steels having the improved straightenability has, however, a disadvantage of an insufficient bending fatigue strength. In addition, if a hardness of the nitrocarburized layer is increased to increase strength, the microalloyed steel falls into a dilemma that the initially intended straightenability is deteriorated.

Summary of the Invention

It is an object of the present invention to provide a nitrocarburized microalloyed steel that can suppress an increase in hardness to such an extent that a straightening  treatment after a nitrocarburizing treatment can be easily performed on the steel even if a normalizing treatment after hot-forging is omitted, and that can ensure sufficiently high bending fatigue strength.

To attain this object, there is provided a nitrocarburized microalloyed steel member according to claim 1.

The remainder of the steel consists of Fe and inevitable impurities.

If this steel composition is adopted and the steel is air-cooled after being hot-forged, a structure of the steel naturally offers a ferrite and pearlite structure. Even if a normalizing treatment after hot-forging is omitted, the straightening treatment can be performed on the nitrocarburized steel. In addition, if the Cu, the Ni, and the Cr are contained in the steel so that the composition parameters F1 and F2 satisfy the expressions (1) and (2), it is possible to ensure sufficiently high bending fatigue strength while suppressing a hardness of the nitrocarburized layer formed on the surface from being excessively increased.

In the composition of the microalloyed steel adopted in the present invention, the Cr, the Cu, and the Ni are particularly important added elements. Among these elements, the Cr forms high-hardness Cr nitrides, and increases the hardness of the nitrocarburized layer. In this case, if an addition amount of the Cr is excessively increased, then the Cr nitrides are excessively formed, the hardness of the nitrocarburized layer is excessively increased, and a straightenability of the steel member is considerably deteriorated. However, the inventor of the present invention discovered that newly addition of the Cu and the Ni so that the composition parameters F1 and F2 satisfy the expressions (1) and (2) enables greatly increasing the fatigue strength while suppressing the increase in hardness (or realizing a satisfactory straightenability while maintaining the fatigue strength at a certain degree), and finally completed the present invention.

The expressions (1) and (2) are experimentally discovered by the inventor of the present invention. The expression (1), i.e.,

$$185WCr+50WCu>20 \quad (1)'$$

represents conditions for adding the Cr and Cu to secure the fatigue strength. In addition, the expression (2), i.e.,

$$8+4WNi+1.5WCu-44WCr>0 \quad (2)'$$

represents conditions for adding the Ni, the Cu, and the Cr to secure the straightenability. A coefficient of the Cr addition amount WCr is a quite high positive value in the expression (1)' whereas it is a high negative value in the expression (2)'. This obviously indicates that the increase in hardness by formation of the Cr nitrides greatly contributes to securing the high fatigue strength ((1)'), but that the increase in hardness conversely contributes to deteriorating the straightenability. Therefore, if the WCu, WCr, and WNi are set so as to satisfy both the expressions (1)' and (2)', the steel member capable of ensuring both the high fatigue strength and the high straightenability, in other words retaining the satisfactory straightenability while maintaining the fatigue strength at a certain degree, can be realized.

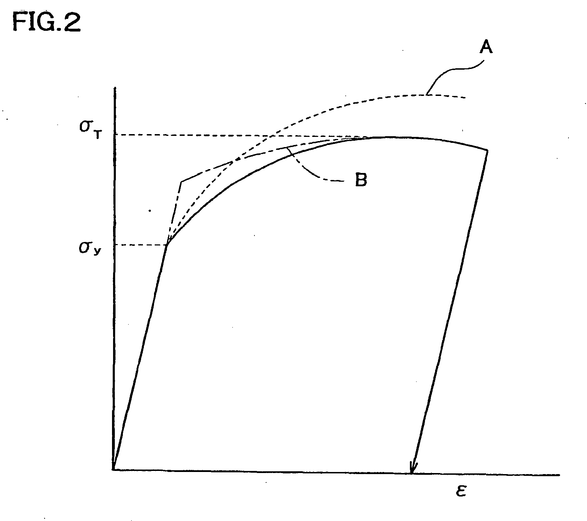

What should be noticed herein is, above all, the effect of adding the Cu. A coefficient of the Cu addition amount WCu is, differently from the Cr addition amount WCr, positive both in the expressions (1)' and (2)'. This signifies that the addition of the Cu can improve both the fatigue strength and the straightenability. This is considered to be due to the fact that the Cu contributes to improving the fatigue strength by a mechanism different from that of the Cr. Namely, during the straightening treatment, it is necessary to leave a necessary deformation on not only a bulk steel material but also the nitrocarburized layer on the surface thereof for the straightening even after the machining load is eliminated, that is, to generate a plastic deformation thereon. Fig. 2 is a typical representation of a stress-strain curve of the material. It is known that a hardness of the material reflects a maximum stress expressed on the stress-strain curve, that is, a tensile strength $\sigma T$. To increase the hardness, i.e., to increase the tensile strength $\sigma T$ corresponds to the need of a higher machining stress so as to generate the same plastic deformation or strain, and this means that the straightenability is deteriorated (as indicated by a broken line A in Fig. 2). However, if a yield stress $\sigma Y$ can be increased while suppressing the increase in hardness (as indicated by a one-dot chain line B in Fig. 2), then the fatigue strength can be increased without greatly deteriorating the straightenability, (in other words the same yield stress can be realized at a lower degree of the hardness, that means improving the straightenability while maintaining the yield stress (or fatigue strength) at a certain degree). In the opinion of the inventor of the present invention, the Cu added to the steel inhibits the plastic deformation (that is, profile shift and proliferation) of a steel matrix of the nitrocarburized layer in some way or the other (e.g., solid-solution hardens the matrix), and increases the yield stress.

On the other hand, the Ni does hardly contribute to improving the fatigue strength as is obvious from the fact that the Ni is not present as a parameter in the expression (1)'. However, it is obvious from a coefficient of the Ni added amount WNi in the expression (2)', the Ni has the effect of improving the straightenability twice as high as that of the Cu. The reason is considered as follows. The Ni is an austenite stabilizing element (note that an austenite is easier to plastically deform than a ferrite), and the Ni added to the steel improves ductility of the steel matrix of the nitrocarburized layer and, therefore, suppresses propagation of a fatigue crack.

The steel composition and reasons for limiting numerical parameters adopted in the present invention will now be described.

"C having a content equal to or more than 0.30 mass % and equal to or less than 0.50 mass %."

The C is a necessary element to secure the strength. However, if the C content is less than 0.30 mass %, the strength cannot be secured. If the C content exceeds 0.50 mass %, the hardness of the material before cutting is excessively increased. This deteriorates cutting machinability. The C content is more preferably equal to or more than 0.31 mass % and equal to or less than 0.45 mass %.

"Si having a content equal to or more than 0.05 mass % and equal to or less than 0.30 mass %."

The Si is contained in the steel as an element serving as a deoxidizer during the heat solution treatment and serving to improve the fatigue strength. If the Si content is less than 0.05 mass %, desired effects cannot be produced. If a large amount of the Si is added so that the Si content exceeds 0.30 mass %, a ferrite phase is hardened and straightenability is deteriorated. The Si content is more preferably equal to or more than 0.06 mass % and equal to or less than 0.28 mass %.

"Mn having a content equal to or more than 0.50 mass % and equal to or less than 1.00 mass %."

The Mn is an element that increases the fatigue strength and that is essential to generate Mn-containing sulfides contributing to improving the machinability. If the Mn content is less than 0.50 mass %, a generation amount of the Mn-containing sulfides is insufficient and the insufficient machinability is provided. On the other hand, if the Mn content exceeds 1.00 mass %, a volume percentage of generation of the pearlite is excessively high, resulting in deterioration in straightenability. The Mn content is more preferably equal to or more than 0.55 mass % and equal to or less than 0.95 mass %.

"S having a content equal to or more than 0.03 mass % and equal to or less than 0.20 mass %."

Similarly to the Mn, the S is an element that is essential to generate the Mn-containing sulfides contributing to improving the machinability. If the S content is less than 0.03 mass %, the generation amount of the sulfides is insufficient and the insufficient machinability is provided. On the other hand, if the S content exceeds 0.20 mass %, a toughness and a ductility of the steel are deteriorated. In addition, cracks and the like tend to occur during the hot-forging and the fatigue strength is reduced. The S content is more preferably equal to or more than 0.04 mass % and equal to or less than 0.15 mass %.

"Cu having a content equal to or more than 0.10 mass % and equal to or less than 0.60 mass %."

As stated, the Cu exhibits the effects of improving the fatigue strength and improving the straightenability. If the Cu content is less than 0.10 mass %, the effects of the Cu are not conspicuous. If the Cu content exceeds 0.60 mass %, a hot workability of the steel is deteriorated. The Cu content is more preferably equal to or more than 0.10 mass % and equal to or less than 0.50 mass %.

"Ni having a content equal to or more than 0.02 mass % and equal to or less than 1.00 mass %."

As stated, the Ni has the effect of improving the straightenability. If the Ni content is less than 0.02 mass %, the effect of the Ni is not conspicuous. If the Ni content exceeds 1.00 mass %, bainite is generated to thereby increase the hardness. As a result, the effect of improving the straightenability is rather hampered, resulting in the deterioration of the machinability. The Ni content is more preferably equal to or more than 0.05 mass % and equal to or less than 0.60 mass %.

"Cr having a content equal to or more than 0.08 mass % and equal to or less than 0.30 mass %."

The Cr has effects of increasing an internal hardness and a surface layer hardness after nitriding, and of improving the fatigue strength. If the Cr content is less than 0.08 mass %, the effects of the Cr are not conspicuous. If the Cr content exceeds 0.30 mass %, then the surface layer hardness is considerably increased; resulting in the deterioration of the straightenability. The Cr content is more preferably equal to or more than 0.08 mass % and equal to or less than 0.25 mass %.

$$\text{``}F1 = 185WCr + 50WCu > 20$$

$$F2 = 8 + 4WNi + 1.5WCu - 44WCr > 0\text{''}$$

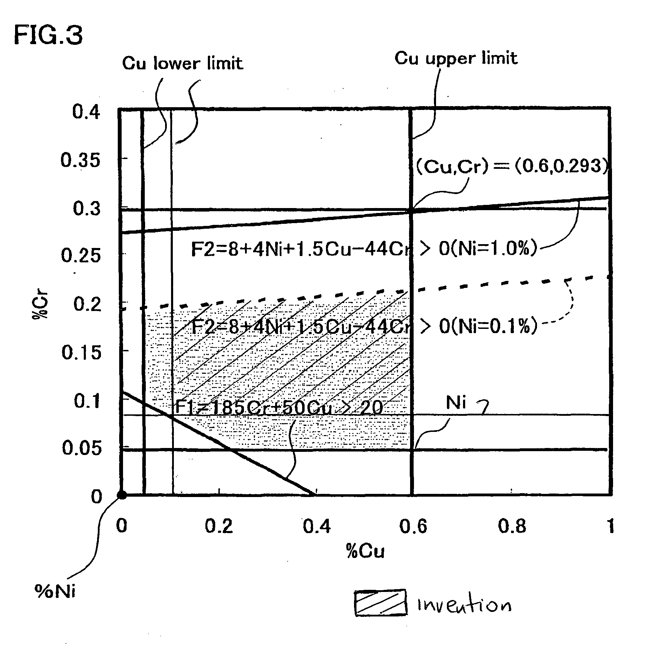

To secure the fatigue strength, the parameter F1 is set to fall within the above-stated range. To secure the straightenability, the parameter F2 is set to fall within the above-stated range. Fig. 3 is a stereoscopic representation of three component ranges of Cu, Cr, and Ni in a three-dimensional coordinate space (a projected plan from an Ni axis side), with a horizontal axis indicating the Cu content, a vertical axis indicating the Cr content, and an axis (Ni axis) at a right angle with respect to a drawing sheet indicating the Ni content. These component ranges are represented as an internal region of a solid figure surrounded by the following six planes in the three-dimensional coordinate space:

$$8 + 4WNi + 1.5WCu - 44WCr = 0,$$

$$185WCr + 50WCu - 20 = 0,$$

WCu=0.10,
WCu=0.6,
WNi=0.02, and
WNi=1.0.

An upper limit of the parameter F1 obtained by linear programming is 84.21 (WCr=0.293 and WCu=0.6), and an upper limit of the parameter F2 is obtained by the linear programming with WNi=1.0, WCu=0.6, and WCr=0.08.

"Ti having a content equal to or more than 0.0020 mass % and equal to or less than 0.0120 mass %."

"N having a content equal to or more than 0.0050 mass % and equal to or less than 0.0250 mass %."

The Ti and N generate fine Ti nitrides (or Ti carbonitrides). The fine Ti nitrides (or Ti carbonitrides) have effects of preventing austenitic grains from being coarsened when the crankshaft is hot-forged, accelerating precipitation of ferrite grains in the ferrite and pearlite structure after cooling, and making pearlite grains finer. The above effects enable to improve the fatigue strength without deteriorating the straightenability of the steel. If the Ti content is less than 0.0020 mass % or the N content is less than 0.0050 mass %, these effects cannot be exhibited. If the Ti content exceeds 0.0120 mass % or the N content exceeds0.0250 mass %, coarse Ti nitrides are generated, to which concentrated stress is applied. As a result, the fatigue strength of the steel member is reduced. More preferably, the Ti content is equal to or more than 0.0030 mass % and equal to or less than 0.010 mass %. In addition, the N content is more preferably equal to or more than 0.007 mass % and equal to or less than 0.020 mass %.

"O having a content equal to or more than 0.0005 mass % and equal to or less than 0.008 mass %."

The O and the Ti, Al, Si, Ca contained in the steel generate oxides, which serve as a precipitation nucleus of MnS, thereby dispersing MnS into the steel finely and uniformly. This MnS has effects of accelerating precipitation of intragranular ferrite to be precipitated in former austenite grains during cooling after hot-forging, uniformly reducing magnitudes of pearlite blocks, and improving the straightenability. If the O content is less than 0.0005 mass %, these effects cannot be exhibited. If the O content exceeds 0.008 mass %, an appropriate oxide composition cannot be obtained. The O content is more preferably equal to or more than 0.001 mass % and equal to or less than 0.005 mass %.

"If the contents of the O, N, and Ti are represented by WO, WN, and WTi mass %, respectively, the WO, WN, and WTi preferably satisfy:

$$0.12 WTi < WO < 2.5 WTi \quad (3)$$

and

$$0.04 WN < WO < 0.7 WN \quad (4)."$$

According to the expressions (3) and (4), if the WO is equal to or lower than a lower limit, then the amount of oxides that serve as the precipitation nucleus of the MnS is reduced, and the MnS cannot be dispersed into the steel finely and uniformly. If the WO is equal to or higher than an upper limit, then Ti oxides are excessively generated, less nitrides are generated, and the growth of the former austenite grains cannot be sufficiently suppressed during the hot-forging.

"Ca having a content equal to or more than 0.0005 mass % and equal to or less than 0.0050 mass %."

The Ca has an effect of improving the machinability. To produce this effect conspicuously, it is essential for the Ca content to be equal to or more than 0.0005 mass %. If the Ca is excessively added so that the Ca content exceeds 0. 0050 mass %, a large amount of high melting point CaS is generated, resulting in serious obstacle to a molten steel casting step.

Allowable ranges of impurity elements will be described. It is noted that the impurity elements are generic terms of sub components other than the above-stated elements, which components are allowed to be contained in the steel within ranges within which the impurity elements do not adversely influence the expression of the effects of the present invention. The impurity elements include the inevitable impurities inevitably mixed into the steel during manufacturing.

"Al having a content (a solid-solution concentration in the bulk steel) equal to or less than 0.045 mass % (including zero mass %)."

If the Al is contained in the steel, then nitrides are precipitated in the nitrocarburized layer, the surface hardness is considerably increased, and the straightenability is deteriorated. Therefore, the Al content is desirably as low as possible and preferably equal to or less than 0.025 mass %, more preferably equal to or less than 0.010 mass %.

"Preferably, P has a content equal to or less than 0.010 mass % (including zero mass %)."

Since the P reduces an impact value, the P content is preferably as low as possible.

"Mo having a content equal to or less than 0.05 mass % (including zero mass %)."

Since Mo deteriorates the straightenability, the Mo content is preferably as low as possible.

"H having a content equal to or less than 0.01 mass %."

Since the H causes a delayed fracture or the like, the H content is preferably as low as possible.

"In the nitrocarburized microalloyed steel member according to the present invention, a Vickers hardness at a position 0.05 millimeters away from an uppermost surface of the nitrocarburized layer is equal to or higher than 280 Hv and equal to or lower than 380 Hv."

If the Vickers hardness is lower than 280 Hv, the sufficient fatigue strength cannot be secured. If the Vickers hardness exceeds 380 Hv, the sufficient straightenability cannot be secured. The Vickers hardness is more preferably equal to or higher than 300 Hv and equal to or lower than 375 Hv. A formation thickness of the nitrocarburized layer is set equal to or larger than 0.1 millimeters and equal to or smaller than 2.0 millimeters, preferably equal to or larger than 0.5 millimeters and equal to or smaller than 1.5 millimeters.

"In the nitrocarburized microalloyed steel member according to the present invention, a ferrite area percentage in an area of the ferrite and pearlite structure is equal to or more than 20 percent and equal to or less than 60 percent."

If the ferrite area percentage is set equal to or more than 20 percent, the straightenability can be improved. If the ferrite area percentage exceeds 60 percent, the fatigue strength is often insufficiently low. The ferrite area percentage is more preferably equal to or more than 30 percent and equal to or less than 55 percent.

Brief Description of the Drawings

Fig. 1 is a front view of one example of a crankshaft according to the present invention;

Fig. 2 is a typical representation of a stress-strain curve;

Fig. 3 is a projected plan of composition ranges of Cu, Cr, and Ni of a microalloyed steel according to the present invention;

Fig. 4 is a graph of plotting fatigue strengths obtained as a test result relative to values of F1; and

Fig. 5 is a graph of plotting crack initiation strokes obtained as a test result relative to values of F2.

Description of the Present Invention

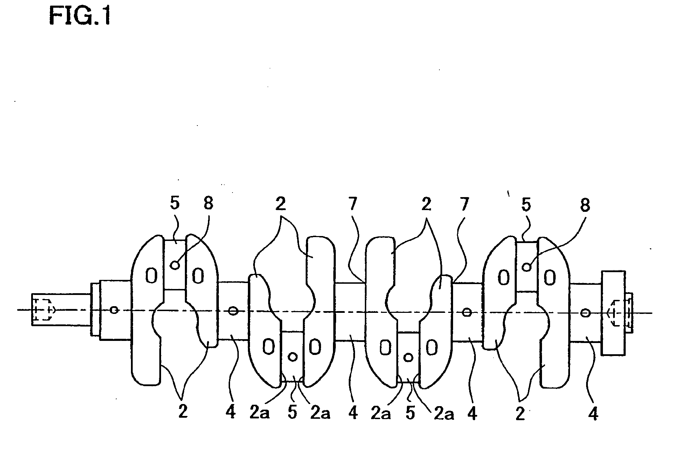

Fig. 1 is a front view of one example of a crankshaft according to the present invention. The crankshaft 1 is configured so that crank arms 2 arranged at predetermined intervals in a direction of a rotational axis O are alternately coupled by a crank journal 4 arranged so that a central axis of the journal 4 coincides with the rotational axis O, and by crank pins 5 each having a central axis at a position away from the rotational axis O by a certain distance in a radial direction. A hole 8 for injecting oil is formed in each crank pin 5. The crank arms 2 form a proximal surface formation portion in which a surface of each crank arm 2 which surface faces the adjacent crank arm 2 is a flat proximal surface 2a. A fillet 7, an outside diameter of which is gradually larger as closer to the proximal surface 2a side, is formed on a protruding proximal end of the crank journal 4 and the crank pin 5 (an axis portion). The protruding proximal end is concave, so that a stress tends to concentrate thereon when a bending load acts thereon. However, by forming the fillet 7, the concentration of the stress is relaxed and a bending strength of the crankshaft 1 can be increased.

Each of the crank journal 4 and the crank pin 5 is formed into an axis having a circular cross section. After the steel having the composition stated above is hot-forged, a nitrocarburized layer is formed on an entire outer circumference of the steel. The crankshaft 1 thus configured is manufactured as follows. Materials are molten, cast, and divided into ingots so as to obtain the steel having the composition already described above in detail. Thereafter, each of the divided steel ingots is hot-forged and then air-cooled. By air-cooling the steel ingot in the atmospheric air, a ferrite and pearlite structure is obtained. Thereafter, the steel ingot is machined into a crankshaft by cutting without performing a normalizing treatment. After cutting, the resultant member is subjected to a nitrocarburizing treatment in an ammonia gas atmosphere. The member is then subjected to a well-known cold straightening treatment using a straightening roll or the like, thereby correcting deformations, strains or the like of the member generated during the nitrocarburizing treatment. As the steel adopted in the present invention, the steel having the above-stated composition is used. This can facilitate the straightening treatment after the nitrocarburizing treatment even if the normalizing treatment is omitted. In addition, despite such excellent straightenability, the steel exhibits excellent fatigue strength.

EXAMPLES

A result of an experiment conducted to confirm the effects of the present invention will be described.

Materials are mixed together to obtain steels having compositions shown in Table 1 (Examples) and Table 2 (Comparisons), respectively, and the steels are molten in an electric furnace into five-ton steel ingots. The O and N contents are adjusted by an amount of mixed gas of $O_2$ $N_2$ and Ar bubbled to the molten steels. Each of these steel ingots is hot-rolled into a rolled rod steel having a cross section of a 70-millimeter square. The rolled rod steel is heated to 1200 degrees Centigrade, held to be heated for 60 minutes and then hot-forged. Thereafter, the resultant rolled rod steel is subjected to natural cooling, thereby manufacturing a steel material having a 40-millimeter square cross section. A test piece is cut out from each steel material, and tested for a surface layer hardness, a straightenability, a ferrite area percentage, and a fatigue strength. The fatigue strength is measured as follows. The test piece having a length of 210 millimeters and a shape disclosed in Fig. 1 of the Patent Literature 6 is created from the materials obtained in the above. A gas nitrocarburizing treatment is performed on the test piece at 580 degrees Centigrade for 1.5 hours, and an Ono type rotating bending fatigue test is executed. This test is conducted on the test piece while varying a maximum load applied thereto, and the maximum load at which the test piece is not broken after being rotated ten million times is set as the fatigue strength of the test piece. The hardness is measured as follows. The same test piece as that used to measure the fatigue strength is created, and a sample for hardness measurement is cut off from an R part of the created test piece. In addition, the hardness of the sample at a position 0.05 millimeters away from a surface layer is measured by a Vickers hardness meter (with a load of 300 grams). The ferrite area percentage is calculated as follows. The ferrite and pearlite structure is mirror-polished and then etched by a picric acid, and a ferrite phase and a pearlite phase are discriminated on the etched structure by an image analysis. The straightenability is measured as follows. A three point bending test is conducted by applying a concentrated load to a central portion of each test piece while both ends thereof are supported at a supporting point distance of 182 millimeters. In this test, the concentrated load is continuously applied to the central portion until a crack occurs. A maximum deflection amount (crack initiation stroke) before occurrence of the crack is obtained as the straightenability of the test piece. The result is shown in the Tables 1 and 2 (In the comparisons, the blank cells in the columns of F1 or F2 in Table 2 indicate that their composition ranges exceed the range of the present invention, thus it is unable to apply F1 or F2 formula).

[Table 1]

| | C | St | Mn | P | S | Cu | Ni | Cr | F1 | F2 | Ti | N | O | Ca | Surface layer hardness (Hv) | Straightenability (mm) | Ferrite area percentage (%) | Fatigue strength (MPa) |
|---|---|---|---|---|---|---|---|---|---|---|---|---|---|---|---|---|---|---|
| Example 1 | 0.38 | 0.07 | 0.94 | 0.01 | 0.06 | 0.10 | 0.10 | 0.15 | 32.8 | 1.95 | 0.0030 | 0.0180 | 0.0020 | 0.0010 | 323 | 8.7 | 34.9 | 416 |
| Example 2 | 0.38 | 0.10 | 0.65 | 0.08 | 0.10 | 0.10 | 0.10 | 0.15 | 32.8 | 1.95 | 0.0040 | 0.0200 | 0.0033 | 0.0020 | 320 | 7.1 | 41.8 | 419 |
| Example 3 | 0.36 | 0.10 | 0.63 | 0.02 | 0.07 | 0.20 | 0.20 | 0.15 | 37.8 | 2.50 | 0.0030 | 0.0110 | 0.0025 | 0.0025 | 314 | 8.5 | 44.5 | 426 |
| Example 4 | 0.35 | 0.15 | 0.64 | 0.02 | 0.08 | 0.49 | 0.49 | 0.15 | 62.3 | 4.10 | 0.0050 | 0.0120 | 0.0010 | 0.0033 | 326 | 8.9 | 42.7 | 433 |
| Example 5 | 0.34 | 0.09 | 0.70 | 0.02 | 0.06 | 0.15 | 0.07 | 0.12 | 29.7 | 3.23 | 0.0050 | 0.0130 | 0.0035 | 0.0008 | 311 | 7.2 | 49.7 | 416 |
| Example 6 | 0.39 | 0.18 | 0.70 | 0.02 | 0.09 | 0.25 | 0.15 | 0.12 | 34.7 | 3.70 | 0.0040 | 0.0080 | 0.0055 | 0.0011 | 302 | 9.9 | 40.1 | 415 |
| Example 7 | 0.37 | 0.12 | 0.63 | 0.02 | 0.07 | 0.50 | 0.10 | 0.15 | 52.8 | 2.55 | 0.0040 | 0.0060 | 0.0040 | 0.0020 | 322 | 7.9 | 42.1 | 429 |
| Example 8 | 0.36 | 0.10 | 0.63 | 0.02 | 0.08 | 0.10 | 0.50 | 0.15 | 32.8 | 3.55 | 0.0050 | 0.0070 | 0.0022 | 0.0035 | 314 | 8.9 | 42.6 | 425 |
| Example 9 | 0.36 | 0.09 | 0.65 | 0.02 | 0.07 | 0.10 | 0.98 | 0.15 | 32.8 | 5.47 | 0.0050 | 0.1050 | 0.0026 | 0.0044 | 320 | 11.2 | 38.2 | 410 |
| Example 10 | 0.34 | 0.18 | 0.73 | 0.01 | 0.09 | 0.24 | 0.15 | 0.15 | 39.8 | 2.36 | 0.0060 | 0.0140 | 0.0036 | 0.0009 | 329 | 7.8 | 46.9 | 426 |
| Example 11 | 0.36 | 0.16 | 0.73 | 0.01 | 0.10 | 0.10 | 0.30 | 0.20 | 42.0 | 0.55 | 0.0030 | 0.0230 | 0.0046 | 0.0010 | 343 | 7.6 | 41.3 | 419 |
| Example 12 | 0.36 | 0.19 | 0.74 | 0.01 | 0.10 | 0.29 | 0.12 | 0.20 | 51.5 | 0.12 | 0.0080 | 0.0200 | 0.0019 | 0.0015 | 343 | 6.8 | 40.0 | 441 |
| Example 13 | 0.36 | 0.20 | 0.77 | 0.01 | 0.10 | 0.10 | 0.49 | 0.20 | 42.0 | 1.31 | 0.0070 | 0.0220 | 0.0029 | 0.0030 | 349 | 5.5 | 37.4 | 415 |
| Example 14 | 0.36 | 0.20 | 0.75 | 0.01 | 0.11 | 0.29 | 0.29 | 0.19 | 49.7 | 1.24 | 0.0100 | 0.0140 | 0.0030 | 0.0026 | 363 | 5.2 | 39.1 | 436 |
| Example 15 | 0.36 | 0.15 | 0.74 | 0.01 | 0.10 | 0.20 | 0.19 | 0.15 | 37.8 | 2.46 | 0.0110 | 0.0120 | 0.0050 | 0.0017 | 359 | 7.0 | 42.7 | 420 |
| Ref. Example 16 | 0.34 | 0.25 | 0.74 | 0.01 | 0.10 | 0.05 | 0.05 | 0.15 | 30.3 | 1.68 | 0.0080 | 0.0130 | 0.0020 | 0.0026 | 313 | 8.5 | 49.0 | 398 |
| Example 17 | 0.42 | 0.15 | 0.55 | 0.01 | 0.15 | 0.30 | 0.20 | 0.18 | 48.3 | 1.33 | 0.0070 | 0.0100 | 0.0025 | 0.0036 | 332 | 7.1 | 33.6 | 430 |
| Ref. Example 18 | 0.33 | 0.10 | 0.60 | 0.01 | 0.04 | 0.30 | 0.20 | 0.06 | 26.1 | 6.61 | 0.0070 | 0.0150 | 0.0065 | 0.0010 | 280 | 11.7 | 55.6 | 402 |

[Table 2]

| | C | Si | Mn | P | S | Cu | Ni | Cr | F1 | F2 | Ti | N | O | Ca | Surface layer hardness (Hv) | Straightenability (mm) | Ferrite area percentage (%) | Fatigue strength (MPa) |
|---|---|---|---|---|---|---|---|---|---|---|---|---|---|---|---|---|---|---|
| Comparison 1 | 0.35 | 0.08 | 0.64 | 0.02 | 0.08 | 0.19 | 0.19 | 0.25 | 55.8 | -1.96 | 0.0020 | 0.0030 | 0.0020 | 0.0007 | 354 | 3.8 | 39.2 | 424 |
| Comparison 2 | 0.34 | 0.10 | 0.73 | 0.01 | 0.10 | 0.48 | 0.49 | 0.26 | 72.1 | -0.76 | 0.0080 | 0.0140 | 0.0018 | 0.0010 | 385 | 3.2 | 36.3 | 463 |
| Comparison 3 | 0.36 | 0.10 | 0.70 | 0.02 | 0.05 | 1.50 | 0.30 | 0.15 | | | 0.0020 | 0.0190 | 0.0020 | 0.0002 | 368 | 7.8 | 35.5 | 372 |
| Comparison 4 | 0.20 | 0.10 | 0.70 | 0.02 | 0.05 | 1.20 | 1.00 | 0.10 | | | 0.0030 | 0.0040 | 0.0017 | 0.0003 | 336 | 9.8 | 64.3 | 381 |
| Comparison 5 | 0.45 | 0.20 | 0.60 | 0.02 | 0.06 | 0.05 | 0.05 | 0.05 | 11.8 | 6.08 | 0.0100 | 0.0060 | 0.0015 | 0.0007 | 270 | 11.8 | 37.2 | 385 |
| Comparison 6 | 0.35 | 0.20 | 0.60 | 0.02 | 0.06 | 0.10 | 0.10 | 0.25 | 51.3 | -2.45 | 0.0010 | 0.0080 | 0.0012 | 0.0004 | 361 | 3.1 | 42.7 | 419 |
| Comparison 7 | 0.42 | 0.20 | 0.70 | 0.02 | 0.05 | 0.20 | 1.50 | 0.20 | | | 0.0010 | 0.0080 | 0.0009 | 0.0002 | 348 | 4.7 | 18.8 | 377 |
| Comparison 8 | 0.55 | 0.20 | 0.90 | 0.02 | 0.07 | 0.20 | 0.10 | 0.20 | | | 0.0030 | 0.0130 | 0.0017 | 0.0001 | 362 | 3.5 | 1.6 | 385 |
| Comparison 9 | 0.40 | 0.20 | 1.50 | 0.01 | 0.05 | 0.20 | 0.20 | 0.20 | | | 0.0060 | 0.0120 | 0.0011 | 0.0002 | 401 | 1.1 | 15.4 | 381 |
| Comparison10 | 0.15 | 0.10 | 0.50 | 0.01 | 0.20 | 0.05 | 0.05 | 0.20 | | | 0.0080 | 0.0140 | 0.0007 | 0.0006 | 327 | 6.7 | 86.2 | 390 |
| Comparison11 | 0.40 | 0.20 | 0.30 | 0.01 | 0.05 | 0.20 | 0.20 | 0.10 | | | 0.0150 | 0.0150 | 0.0010 | 0.0003 | 277 | 11.6 | 48.0 | 374 |
| Comparison12 | 0.35 | 0.10 | 0.70 | 0.01 | 0.25 | 0.10 | 0.10 | 0.10 | | | 0.0010 | 0.0180 | 0.0010 | 0.0002 | 298 | 10.0 | 50.5 | 370 |
| Comparison13 | 0.40 | 0.20 | 0.55 | 0.02 | 0.10 | 0.20 | 0.30 | 0.40 | | | 0.0010 | 0.0120 | 0.0011 | 0.0002 | 428 | 1.3 | 23.4 | 383 |
| Comparison14 | 0.37 | 0.50 | 0.65 | 0.02 | 0.08 | 0.20 | 0.20 | 0.15 | | | 0.0010 | 0.0150 | 0.0022 | 0.0002 | 354 | 4.9 | 45.0 | 384 |
| Comparison15 | 0.36 | 0.79 | 0.64 | 0.02 | 0.08 | 0.20 | 0.20 | 0.15 | | | 0.0010 | 0.0080 | 0.0023 | 0.0001 | 365 | 4.6 | 48.6 | 388 |

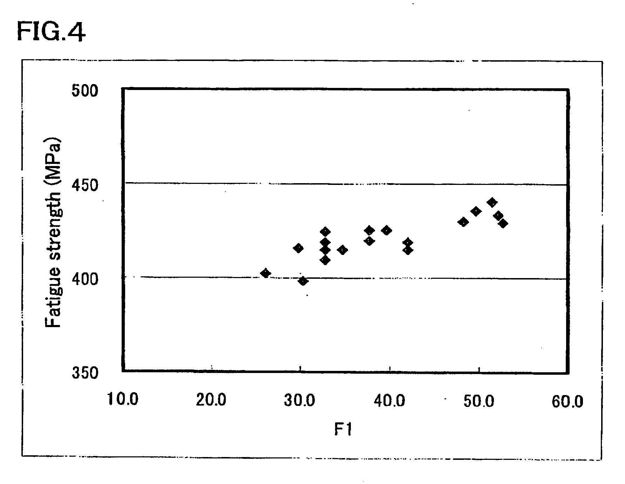

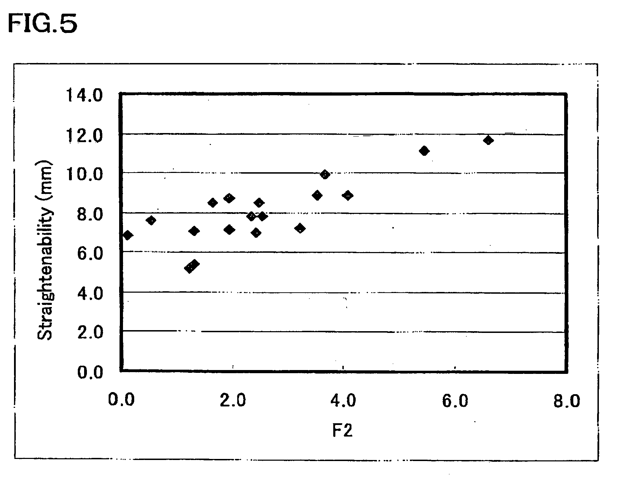

As evident from this result, either the straightenability or the fatigue strength of each of the crankshafts using the steels according to respective comparisons does not reach a necessary level. Each of the crankshafts using the steels according to respective examples of the present invention is, by contrast, excellent in both straightenability and fatigue strength. Ti, N and Ca are intentionally added to each example, however as stated above (intentional addition: excluding inevitable impurities). Fig. 4 is a graph of plotting the fatigue strengths obtained as the test result relative to values of F1 of respective compositions. Fig. 5 is a graph of plotting the crack initiation strokes obtained as the test result relative to values of F2 of respective compositions. As can be seen from Figs. 4 and 5, a correlation is recognized between the F1 or F2 and the test result.

**Claims**

1. A nitrocarburized microalloyed steel member used for a crankshaft consisting of a microalloyed steel that includes a nitrocarburized layer being equal to or larger than 0.1 millimeters and equal to or smaller than 2.0 millimeters on a surface,a Vickers hardness at a position 0.05 millimeters away from an uppermost surface of the nitrocarburized layer is equal to or higher than 280 Hv and equal to or lower than 380 Hv, a cross-sectional structure of the steel except for the nitrocarburized layer including a ferrite and pearlite structure, wherein a ferrite area percentage in an area of the ferrite and pearlite structure is equal to or more than 20 percent and equal to or less than 60 percent, and wherein the microalloyed steel consists of:

   C having a content equal to or more than 0.30 mass % and equal to or less than 0.50 mass %;
   Si having a content equal to or more than 0.05 mass % and equal to or less than 0.30 mass %;
   Mn having a content equal to or more than 0.50 mass % and equal to or less than 1.00 mass %;
   S having a content equal to or more than 0.03 mass % and equal to or less than 0.20 mass %;
   Cu having a content equal to or more than 0.10 mass % and equal to or less than 0.60 mass %;
   Ni having a content equal to or more than 0.02 mass % and equal to or less than 1.00 mass %;
   Cr having a content equal to or more than 0.08 mass % and equal to or less than 0.30 mass %;
   Ti having a content equal to or more than 0.0020 mass % and equal to or less than 0.0120 mass %;
   N having a content equal to or more than 0.0050 mass % and equal to or less than 0.0250 mass %;
   O having a content equal to or more than 0.0005 mass % and equal to or less than 0.008 mass %, and
   Ca having a content equal to or more than 0.0005 mass % and equal to or less than 0.0050 mass %; the balance being Fe and unavoidable impurities, and wherein
   if the contents of the Cu, the Ni, and the Cr are represented by WCu, WNi, and WCr mass %, respectively, and composition parameters F1 and F2 are 185WCr+50WCu and 8+4WNi+1.5WCu-44WCr, respectively, then the composition parameters F1 and F2 satisfy:

$$F1 > 20 \quad (1)$$

   and

$$F2 > 0 \quad (2).$$

2. The nitrocarburized microalloyed steel member according to claim 1, wherein if the contents of the O, the N, and the Ti are represented by WO, WN, and WTi mass %, respectively, the WO, the WN, and the WTi satisfy:

$$0.12WTi < WO < 2.5WTi \quad (3)$$

   and

$$0.04WN < WO < 0.7WN \quad (4).$$

**Patentansprüche**

1.  Nitrokarburiertes mikrolegiertes Stahlelement, das für eine Kurbelwelle verwendet wird, bestehend aus einem mikrolegierten Stahl, umfassend eine nitrokarburierte Schicht auf einer Oberfläche, die gleich oder größer 0,1 Millimeter und gleich oder kleiner 2,0 Millimeter ist, mit einer Vickers-Härte an einer Position 0,05 Millimeter entfernt von einer obersten Oberfläche der nitrokarburierten Schicht, die gleich oder höher als 280 Hv und gleich oder kleiner 380 Hv ist, eine Querschnittsstruktur des Stahls, ausgenommen die nitrokarburierte Schicht, umfassend eine Ferrit- und Perlitstruktur, worin ein Ferritbereich-Prozentanteil in einem Bereich aus der Ferrit- und Perlitstruktur gleich oder größer 20 Prozent und gleich oder kleiner 60 Prozent ist, und worin der mikrolegierte Stahl besteht aus:

    C mit einem Gehalt gleich oder größer 0,30 Masse-% und gleich oder kleiner 0,50 Masse-%;
    Si mit einem Gehalt gleich oder größer 0,05 Masse-% und gleich oder kleiner 0,30 Masse-%;
    Mn mit einem Gehalt gleich oder größer 0,50 Masse-% und gleich oder kleiner 1,00 Masse-%;
    S mit einem Gehalt gleich oder größer 0,03 Masse-% und gleich oder kleiner 0,20 Masse-%;
    Cu mit einem Gehalt gleich oder größer 0,10 Masse-% und gleich oder kleiner 0,60 Masse-%;
    Ni mit einem Gehalt gleich oder größer 0,02 Masse-% und gleich oder kleiner 1,00 Masse-%;
    Cr mit einem Gehalt gleich oder größer 0,08 Masse-% und gleich oder kleiner 0,30 Masse-%;
    Ti mit einem Gehalt gleich oder größer 0,0020 Masse-% und gleich oder kleiner 0,0120 Masse-%;
    N mit einem Gehalt gleich oder größer 0,0050 Masse-% und gleich oder kleiner 0,0250 Masse-%;
    O mit einem Gehalt gleich oder größer 0,0005 Masse-% und gleich oder kleiner 0,008 Masse-%; und
    Ca mit einem Gehalt gleich oder größer 0,0005 Masse-% und gleich oder kleiner 0,0050 Masse-%; wobei der Rest Fe und unvermeidbare Verunreinigungen sind, und worin,
    wenn die Gehalte von Cu, Ni und Cr durch WCu, WNi bzw. WCr in Masse-% repräsentiert werden und die Zusammensetzungsparameter F1 und F2 185WCr+50WCu bzw. 8+4WNi+1,5WCu-44WCr sind, die Zusammensetzungsparameter F1 und F2 erfüllen:

    $$F1 > 20 \ (1)$$

    und

    $$F2 > 0 \ (2).$$

2.  Nitrokarburiertes mikrolegiertes Stahlelement nach Anspruch 1, worin,
    wenn die Gehalte von O, N und Ti durch WO, WN bzw. WTi in Masse-% repräsentiert werden, WO, WN und WTi erfüllen:

    $$0,12WTi < WO < 2,5WTi \ (3)$$

    und

    $$0,04 \ WN < WO < 0,7WN \ (4).$$

**Revendications**

1.  Un élément en acier microallié nitrocarburé utilisé pour un vilebrequin composé d'un acier microallié qui comprend une couche nitrocarburée supérieure ou égale à 0,1 millimètre et inférieure ou égale à 2,0 millimètres sur une surface, une dureté de Vickers dans une position située à 0,05 millimètre d'une surface à l'extrémité supérieure de la couche nitrocarburée étant supérieure ou égale à 280 Hv et inférieure ou égale à 380 Hv, une structure de l'acier en coupe transversale pour la couche nitrocarburée comprenant une structure de ferrite et de perlite, dans lequel un pourcentage en surface de ferrite dans une zone de la structure de ferrite et de perlite est supérieur ou égal à 20 pour cent et inférieur ou égal à 60 pour cent, et dans lequel l'acier microallié se compose comme suit:

C possédant une teneur égale ou supérieure à 0,30% en masse et égale ou inférieure à 0,50% en masse ;
Si possédant une teneur égale ou supérieure à 0,05% en masse et égale ou inférieure à 0,30% en masse ;
Mn possédant une teneur égale ou supérieure à 0,50% en masse et égale ou inférieure à 1,00% en masse ;
S possédant une teneur égale ou supérieure à 0,03% en masse et égale ou inférieure à 0,20% en masse ;
Cu possédant une teneur égale ou supérieure à 0,10% en masse et égale ou inférieure à 0,60% en masse ;
Ni possédant une teneur égale ou supérieure à 0,02% en masse et égale ou inférieure à 1,00% en masse ;
Cr possédant une teneur égale ou supérieure à 0,08% en masse et égale ou inférieure à 0,30% en masse ;
Ti possédant une teneur égale ou supérieure à 0,0020% en masse et égale ou inférieure à 0,0120% en masse ;
N possédant une teneur égale ou supérieure à 0,0050% en masse et égale ou inférieure à 0,0250% en masse ;
O possédant une teneur égale ou supérieure à 0,0005% en masse et égale ou inférieure à 0,008% en masse et
Ca possédant une teneur égale ou supérieure à 0,0005% en masse et égale ou inférieure à 0,0050% en masse ;
le solde étant Fe et des impuretés inévitables, et dans lequel si les teneurs de Cu, Ni et Cr sont respectivement représentées par des % en masse de WCu, WNi et WCr et les paramètres de composition F1 et F2 sont respectivement $185W_{Cr}+50W_{Cu}$ et $8+4W_{Ni}+1,5W_{Cu}-44W_{Cr}$, les paramètres de composition F1 et F2 satisfont à :

$$F1 > 20 \ (1)$$

et

$$F2 > 0 \ (2).$$

2. L'élément en acier microallié nitrocarburé selon la revendication 1, dans lequel si les teneurs de O, N et Ti sont représentées respectivement par des % en masse de WO, WN et WTi, les WO, WN et WTi satisfont à :

$$0,12W_{Ti}<W_O<2,5W_{Ti} \ (3)$$

et

$$0,04W_N<W_O<0,7W_N \ (4).$$

## FIG.1

# FIG.2

# FIG.3

Cu lower limit    Cu upper limit

$(Cu, Cr) = (0.6, 0.293)$

$F2 = 8 + 4Ni + 1.5Cu - 44Cr > 0(Ni=1.0\%)$

$F2 = 8 + 4Ni + 1.5Cu - 44Cr > 0(Ni=0.1\%)$

$F1 = 185Cr + 50Cu > 20$    Ni

%Cr

%Cu

%Ni

Invention

## FIG.4

## FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10030632 A
- JP 6128690 A
- JP 5279795 A
- JP 5279794 A
- JP 9324258 A
- JP 2002226939 A
- JP 2005264270 A
- EP 1548141 A1